# EUROPEAN PATENT SPECIFICATION

(11) **EP 2 036 427 B1**
(45) Date of publication and mention of the grant of the patent: **16.09.2015**
(21) Application number: 06757400.4
(22) Date of filing: 19.06.2006
(51) Int. Cl.: A01G 9/02, A01G 9/10

(54) **CONTAINER FOR PLANT CULTIVATION**
BEHÄLTER ZUR PFLANZENZÜCHTUNG
RÉCIPIENT POUR LA CULTURE DE PLANTES

(43) Date of publication of application: 18.03.2009
(73) Proprietor: Green Support Inc., Kaiduka city Osaka 597-0105 (JP)
(72) Inventor: ITO, Nobuaki, Kaiduka city, Osaka 5970105 (JP)
(74) Representative: Jostarndt, Hans-Dieter
(86) International application number: PCT/JP2006/312257
(87) International publication number: WO 2007/148376

(56) References cited:
- EP-A1- 0 082 653
- EP-A1- 0 255 690
- EP-A2- 1 306 004
- FR-A1- 2 821 712
- JP-A- 10 102 369
- JP-A- 2000 060 317
- JP-A- 2000 069 859
- JP-A- 2004 329 013
- JP-A- 2004 329 013
- JP-U- 3 065 552

## Description

### TECHNICAL FIELD

The present invention relates to a container for plant cultivation used for a period from seeding to cultivation after planting.

### BACKGROUND ART

Conventionally, a cultivation pot which is formed of a petroleum resin material such as chloroethylene is known as a container for cultivating plant seedlings.

The cultivation pot is manufactured by molding a resin material, and thus a die needs to be manufactured for the pot. Manufacturing the die requires considerable costs, and there has been a problem in that large-scale facilities are necessary for manufacturing the die.

Therefore, the applicant proposed a horticultural container made of a non-woven fabric (e.g., patent document 1).

On the other hand, since a cultivation pot, which is made of plastics such as chloroethylene, does not degrade under natural circumstances, problems may be caused in terms of environmental protection. Accordingly, proposed is a cultivation pot (e.g., patent document 2) made of layered products composed of two types of biodegradable plastics, which have different degradability from each other, and paper. In patent document 3, the body and the base of a seedling pot are formed from a laminated sheet having a thermoplastic resin layer with waterproofing properties on a paper base material, the outer surface being the paper base material and the inner surface being thermoplastic resin layer with waterproofing properties. The paper base material has a high rigidity and maintains a pot shape, while the thermoplastic resin layer with waterproofing properties prevents water entering the paper from the soil in the pot and confers moldability due to the heat seal. The thermoplastic resin layer with waterproofing properties used as the inner surface of the seedling pot may be any common thermoplastic synthetic resin such as a polyolefin resin, polyester resin or acrylic resin, these being used alone or two or more used in combination. Examples of thermoplastic, biodegradable resins with waterproofing properties are disclosed as polyhydroxybutyrate, polylactic acid, polycaprolactone, polybutylene succinate, polybutylene succinate/adipate, polybutylene succinate/carbonate, polyethylene succinate, polyvinyl alcohol, modified starch, cellulose acetate and chitosan/cellulose/starch, these being used alone or two or more used in combination. A body and base of a seedling pot formed from a laminated sheet having a thermoplastic resin layer with waterproofing properties on a paper base material does not prevent penetration of plant roots.

Patent document1: Japanese Laid-Open Patent Publication No.2004-329013

Patent document2: Japanese Laid-Open Patent Publication No.H09-98671

Patent document3: Euorpean Laid-Open Patent Publication EP-A2-1 306 004.

However, according to patent document 1, a case where a weight (weight per square meter, denoted by g/m²) of the non-woven fabric to be used is large, for example, 1260g/m², can be set aside, whereas in the case where the weight is small, there are problems in that side surfaces of the container are deformed when soil for cultivating a plant is poured manually or by machine in the container, and the soil cannot be poured in appropriately.

Therefore, when a biodegradable non-woven fabric, specifically, is to be used, a user of the same tends to use such a non-woven fabric that is as light in weight as possible in consideration of costs as well as in consideration of requirements of prompt degradation after the container is buried in the ground. Such prompt degradation after planting is preferable, however, when the weight of the non-woven fabric is large, it takes some time until its degradation.

On the other hand, as shown in patent document 2, a cultivationpot formedbyplacingpaper in the center and laminating the paper with biodegradable plastics will not be deformed when the soil is poured therein. However, since both surfaces of the paper are laminated with the biodegradable plastics, the pot is less permeable to water and air. Further, since an inner surface of the pot is smooth, roots extend in a rolled-up manner along an inner wall surface of the container. In other words, there have been problems of deformed root systems, such as a case where lateral roots rotate downward along the inner wall surface, and a case where lateral roots rotate downward along the inner wall surface to a bottom surface of the container and rotate several times along edges of the bottom surface.

### DISCLOSURE OF THE INVENTION

### PROBLEMS TO BE SOLVED BY THE INVENTION

An object of the present invention is to provide a container for plant cultivation which allows easy pouring of soil for cultivation, requires no increase in a weight of a non-woven fabric to be used, accelerates growth of lateral roots, allows reduction in costs, and is environmentally friendly as being made of a biodegradable material.

### SOLUTION TO THE PROBLEMS

The invention as claimed in claim 1 is a container for plant cultivation being of an approximately inverted frustum shape or an inclined frustum shape having an upper opening portion. The side surfaces and a bottom surface of the container for plant cultivation are composed of paper and a non-woven fabric which is made of biodegradable fibers, wherein the biodegradable fibers are composed solely of polylactic acid, and the non-woven fabric forms an inner side of the container for plant cultivation, and the paper forms an outer side thereof.

The invention as claimed in claim 2 is the container for plant cultivation according to claim 1. The side surfaces of the container for plant cultivation are joined in dots by high-frequency fusion.

### EFFECT OF THE INVENTION

A container for plant cultivation of the present invention is of an approximately inverted frustum shape or of an inclined frustum shape, and since side surfaces thereof are formed of paper and a non-woven fabric which is made of biodegradable fibers, stiffness of the side surfaces of the container is increased compared to that formed of the non-woven fabric only. Accordingly, the side surfaces of the container are less deformed even when soil for cultivation is poured therein manually or by machine, and consequently, it is possible to efficiently pour the soil for cultivation into the container for plant cultivation.

Further, the weight of the non-woven fabric made of the biodegradable fibers ranges between 10g/m² and 70g/m², and thus it is possible to provide an inexpensive container for plant cultivation.

Still further, the above-describedpaper is made by using a lesser amount of a sizing agent, or is non-sized paper, and thus hydrophilicity of fibers of the paper per se will not be disturbed. Joint portions of the side surfaces of the container for plant cultivation are joined by high-frequency fusion, and thus the container has appropriate joint strength before buried in the ground. After the container is buried in the ground, plant roots find space to grow, and thus destruction of the container by the plant roots is accelerated.

The container for plant cultivation of the present invention is composed of only such materials that easily degrade in the natural world. Therefore, no effort is required to collect and dispose of the container, and the natural environment is not damaged by the container.

These and other objects, features, aspects and advantages of the present invention will become more apparent from the following best mode for carrying out the present invention.

### BRIEF DESCRIPTION OF THE DRAWINGS

[FIG. 1] FIG. 1 is a perspective view of a container for plant cultivation.
[FIG. 2] FIG. 2 is a development view of a container for plant cultivation having an approximately inverted square pyramidal frustum shape.
[FIG. 3] FIG. 3 shows a development view of a container for plant cultivation having an approximately inverted triangular pyramidal frustum shape.

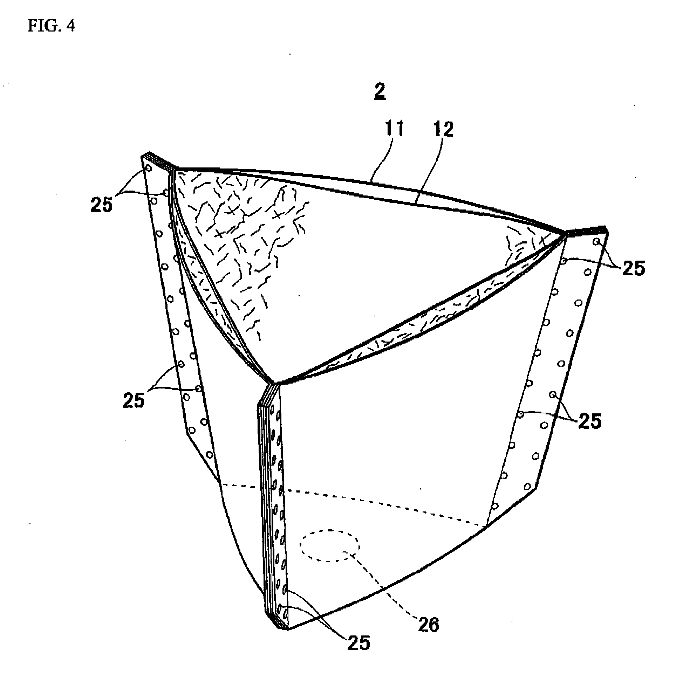

[FIG. 4] FIG. 4 is a perspective view of the container for plant cultivation formed by high-frequency fusion.
[FIG. 5] FIG. 5 is a schematic diagram showing soil potting performed by a potting machine.
[FIG. 6] FIG. 6 is an external view of the container for plant cultivation of the present invention (watering is performed on a sunny day).
[FIG. 7] FIG. 7 is a diagram showing a degree of growth of roots in the container which is buried in the ground after germination.

### DESCRIPTION OF THE REFERENCE CHARACTERS

- 1, 2: container for plant cultivation
- 11: paper
- 12: biodegradable non-woven fabric
- 13: biodegradable sewing thread
- 15, 15': edge to be overlapped at the time of jointing
- 16, 16': edge to be overlapped at the time of jointing
- 17, 17': edge to be overlapped at the time of jointing
- 18, 18': edge to be overlapped at the time of jointing
- 19, 26: slit (if necessary) or through portion
- 22, 22': edge to be overlapped at the time of jointing
- 23, 23': edge to be overlapped at the time of jointing
- 24, 24': edge to be overlapped at the time of jointing
- 25: high-frequency fusion point
- 26: paper through portion
- 31: soil
- 32: container for plant cultivation
- 33: plate
- 41: degrading paper
- 42: sewn portion
- 51: root

### BEST MODE FOR CARRYING OUT THE INVENTION

In the present invention, an approximately inverted frustum shape or an inclined frustum shape refers to a pyramidal frustum or an inclined pyramidal frustum, or a conical frustum or an inclined conical frustum. Generally, triangular, square, pentagonal, and hexagonal pyramidal frustums, inclined versions of such pyramidal frustums, the conical frustum, and the inclined conical frustum are used. Among the frustums, the triangular pyramidal frustum, the square pyramidal frustum, the inclined triangular pyramidal frustum, the inclined square pyramidal frustum, the conical frustum, and the inclined conical frustum, which allow reduction of the number of manufacturing processes, are preferable in view of the manufacturing processes of the container.

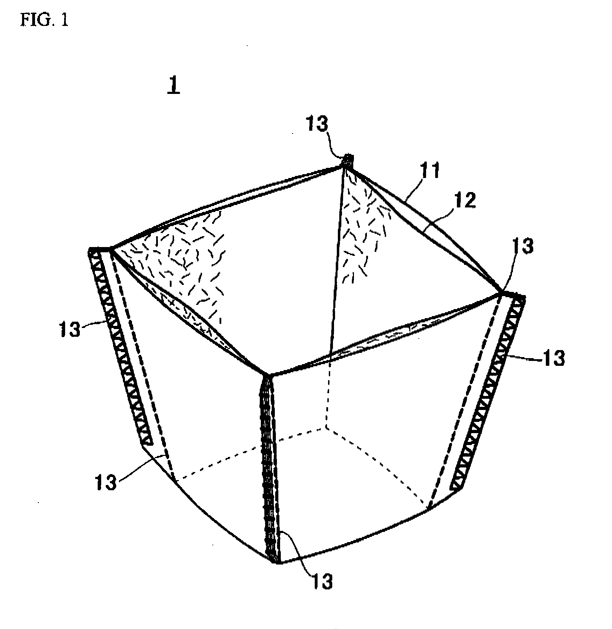

Each of the frustums is used in an approximately inverted manner, as shown in FIG. 1. Namely, a bottom surface of a normally placed frustum is regarded as an upper opening portion. Further the frustum is used in the approximately inverted manner, since the inverted frustum shape of the container when soil for cultivation is poured into the container is not identical with an inverted frustum shape of a rigid body.

In terms of stability, the approximately inverted frustum or the inclined frustum is preferably formed such that an area ratio of its upper opening portion to its bottom surface is equal to or less than 3:1.

The side surfaces and the bottom surface of the container for plant cultivation of the present invention are each composed of a biodegradable non-woven fabric, which is composed solely of polylactic acid and forms an inner side of the container, and paper which forms an outer side thereof.

The paper and the non-woven fabric made of biodegradable fibers, which compose the side surfaces and the bottom surface of the container, maybe layered on each other, or are not necessarily layered on each other.

In the case of a layered state, a biodegradable adhesive agent such as starch may be used as an adhesive agent.

It is preferable that the paper and the non-woven fabric which is made of the biodegradable fibers are not layered on each other. This is because the adhesive agent need not be used for this case.

Since the side surfaces and the bottom surface of the container for plant cultivation are composed of the non-woven fabric and the paper, permeability of the surfaces to the air and water is not disturbed unlike the case where the paper is laminated with films. Accordingly, when a plant is grown on an open field before the plant and the cultivation container are buried into the planting ground, roots of the plant are able to have contact with the air easily. When the roots reach an air layer which is sufficiently permeable to the air and has a sufficient volume, the roots are caused to stop extending. That is, air pruning is applied to the roots, like the case where root tips are pruned by machine, whereby significant deformation of root system can be prevented.

Further, in the case of a high temperature, like in the summer, since the non-woven fabric and the paper each has appropriate water-permeability, it is possible to prevent an excessive increase in a temperature of each of the container and the soil in the container. This is because heat inside the container is removed when the water is evaporated due to heat of evaporation. This advantageously affects growth of plant roots. That is, since the temperature is lowered, hardening effect can be also expected.

It is noted that limitation of water in the soil, which is caused by the water evaporation and the water permeation through the container to the outside, prevents spindly growth and leads to the hardening effect.

In the present invention, any type of biodegradable fibers may be used except for such a biodegradable fiber that significantly degrades during cultivating a seedling and consequently loses strength. For example, such fibers may be used that are made, solely or jointly, from polyethylene succinate, polyethylene succinate adipate, polybutylene succinate, polybutylene succinate adipate, polycaprolactone, polycaprolactone butylene succinate, polylactic acid, polyglycolic acid, or polyvinyl alcohol, or copolymers composed of some of the aforementioned components. In addition, cellulose fibers such as cotton, and fibers made from animal hair such as wool may be used.

As with natural biodegradable polymers such as cotton and silk, the polylactic acid is hardly degradable under normal use conditions, but degrades at an accelerated pace under a high-temperature and high-humidity condition. Therefore, it is preferable to use the polylactic acid for the container for plant cultivation. It is expected that the container does not degrade under the condition where the container is located on an open field before being buried in the planting ground, and starts degrading after being buried in the planting ground.

The non-woven fabric used in the present invention is not particularly limited provided that a desired performance as a material for cultivating seedlings is achieved, and any non-woven fabric, which is manufactured by a generally known method such as spunbonding, needlepunching, spunlacing, chemical bonding, and thermal bonding, may be selected.

The non-woven fabric manufactured by the chemical bonding method includes a non-biodegradable component, and thus it is preferable to use those manufactured by other methods.

The weight of the non-woven fabric composed of the biodegradable fibers used in the present invention ranges between 10g/m² and 70g/m². When the weight of the non-woven fabric composed of the biodegradable fibers is equal to or less than 10g/m², there is a problem in strength, and when the weight is equal to or more than 70g/m², there is a problem in costs.

More preferably, the weight of the non-woven fabric composed of the biodegradable fibers ranges between 20g/m² and 50g/m².

In the case where the weight of the non-woven fabric composed of the biodegradable fibers is small, lateral roots can grow outside the container without being disturbed by the fibers of the non-woven fabric, when the container is buried in the ground. In other words, in the case where the weight of the non-woven fabric is large, when the lateral roots are to pass through the non-woven fabric, non-woven fabric layers constitute a barrier, where the lateral roots form root mass. Thereafter, a so-called callus state is formed. Namely, thin roots capable of passing through the non-woven fabric layers are developed (i.e., parts of roots passing through the non-woven fabric layers become thinner), and normal-sized lateral roots grow again thereafter. On the other hand, when the weight is small, the roots can grow without experiencing such a callus state, and can extend favorably.

Examples of the paper used in the present invention are printing paper, writing paper, drawing paper, wrapping paper, filter paper, blotting paper, electrical insulating paper, fancy paper, specially-treated paper, miscellaneous recyclable paper, and the like.

As the paper used in the present invention, paper having uneven surfaces are preferable rather than paper having undergone surface smoothing processing such as calender processing. This is because at the time of adhesion, particularly at the time of the high-frequency fusion, the paper having the uneven surfaces enhances adhesion.

When the paper is placed so as to form an outer surface side of the container, and when black paper is used, for example, it is possible to achieve a thermal effect.

In a similar manner, when the paper is placed so as to form the outer surface side, it is possible to print thereon a type and the like of a plant to be cultivated, and display details of the plant even before germination.

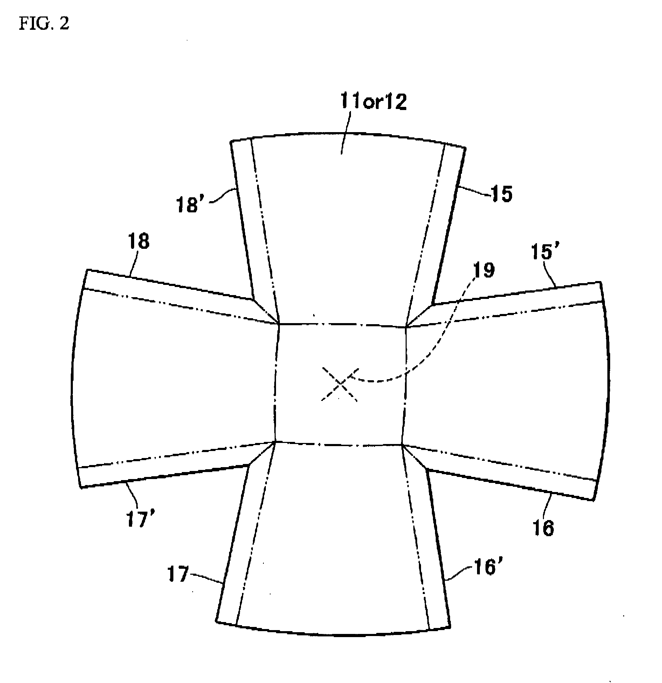

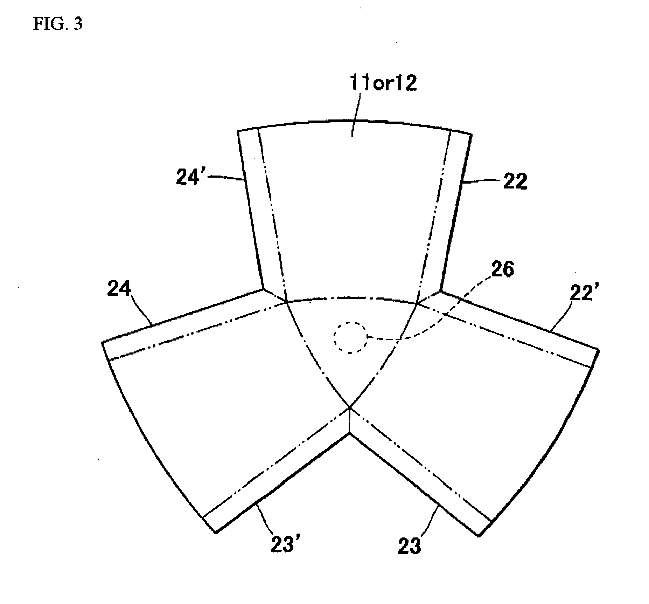

The paper composing the bottom surface of the container for plant cultivation may have a through portion, or need not have the through portion. However, preferably, the paper has the through portion. For example, a shape of the through portion is as indicated by dashed lines in each of FIG. 2 and FIG. 3.

When the paper composing the bottom surface of the container does not have the through portion, its water holding property is preferable compared to the paper having the through portion. Particularly, such a tendency is significant when a larger amount of a sizing agent is used. However, degradability of the paper composing the bottom surface of the container is likely to be deteriorated. This indicates, on the other hand, that the bottom surface will not fall out even when the container having a plant cultivated therein is lifted, for example, and accordingly, the capability of the container to hold the soil poured therein can be improved.

When the paper placed on the bottom surface of the container for plant cultivation has the through portion, various types of paper may be used. That is, regardless of the degree of sizing, when an area of the through portion is decreased, the water holding property can be improved, whereas when the area of the through portion is increased, the water-permeability is improved.

For example, even if a larger amount of the sizing agent is used, the bottom surface of the container for plant cultivation excels in the water-permeability when the area of the through portion is increased, whereas the bottom surface excels in the water holding property when the area of the through portion is decreased.

Further, when a large amount of the sizing agent is used, hydrophobic property of the paper is enhanced, and thus it is possible to delay degradation caused by a wet condition.

However, the paper using a small amount of the sizing agent is preferable. This is because water absorbing property and the water holding property of the paper fibers are not disturbed. Examples of such paper is coarse paper, newspaper, recycled paper and the like.

A more preferable example is non-sized paper. Examples of the non-sized paper are filter paper, blotting paper, and the like.

In some cases, quick degradation caused by the wet condition is required. When the container degrades quickly, it is possible to allow the roots to extend favorably.

The shape of the through portion of the paper is not particularly limited.

The through portion may be of a hole shape, or may be formed with cross-shaped slits or parallel-lined slits.

If the through portion is provided, it is possible to take into consideration characteristics of watering facilities in the plantation field and those of a plant. Particularly, a degree of dryness or humidity can be adjusted easily.

Further, the area of the through portion is determined appropriately in accordance with the amount of the sizing agent used in the paper, the amount of water required for the plant roots, and the like. For example, in the case of a plant which is likely to suffer root rot, it is preferable that the area of the hole at the through portion is large in consideration of the water-permeability.

Adjoining edges of each of the frustums of the present invention are joined, whereby a three-dimensional shape is formed.

The joint is performed by sewing, bonding, or fusing, for example.

Among the joint methods, joint by sewing or fusing is preferable. In the case of joint with an adhesive agent, a problem of migration of an additive agent such as plasticizer, or an environmental problem is likely to occur.

In the case of joint by sewing, it is preferable to use a biodegradable thread. For example, a thread composed of polylactic acid may be used. This is because such a thread degrades together with the container for plant cultivation, and strength of thread is approximately the same as that of the container.

As the fusing method, thermal fusion, high-frequency fusion, ultrasound fusion, and the like is used. The high-frequency fusion is an internal heating method, and thus is used preferably, and also excels in fusion efficiency.

Fusion is performed linearly or in dots. When the growth of the lateral roots is taken into consideration, the dotted fusion is preferable. This is because the roots grow while finding space to pass through.

When the fusion is performed linearly, strength of joint portion is increased. In this case, it is possible to bury the container in the ground after seeding.

When the fusion is performed in dots, the intervals between the dots are used as paths for the lateral roots of the plant to grow, and accordingly, the growth of the plant is accelerated. In this case, it is preferable to bury the container into the ground after germination, instead of after seeding. This is because the growth of the roots after being buried into the ground is not disturbed. A pattern formed with the dots is not particularly limited. The pattern may be a linear pattern, or may be a houndstooth check pattern. However, in order to maintain the strength, the pattern formed by the dots is preferably the houndstooth check pattern.

Further, when the fused portion of the container for plant cultivation is formed with dots, the shape of container is easily degradable as the lateral roots of the plant grow after the container is buried in the ground. Accordingly, the growth of the plant roots is not disturbed, and the roots can extend favorably.

The side surfaces of the container for plant cultivation may be fused at one portion, however, the side surfaces of the container are preferably fused at a plurality of portions. When the side surfaces of the container are fused at two portions, it is difficult to ensure the shape of the bottom surface of the container (since, theoretically, only a line is formed, however, the shape of the side surfaces of the container is deformed when the soil is poured therein, and thus the shape of the bottom surface is substantially ensured). Accordingly, it is preferable that the side surfaces of the container are fused at three or more portions in order to form a stable bottom surface.

The fusion is performed by overlapping respective pieces of the biodegradable non-woven fabric. That is, edges to be fused are overlapped so as to form layers composed of the paper, the biodegradable non-woven fabric, and the paper, in this order. Thereafter, the paper layer is irradiated from its outer surface side with a high-frequency wave linearly or in dots, whereby the fusion is achieved. The biodegradable non-woven fabric is fused by the high-frequency wave irradiation, and the respective pieces of the non-woven fabric are melted with each other. Accordingly, the fused biodegradable non-woven fabric penetrates into paper fibers, and an anchor effect is exerted, which enhances joint strength.

The side surfaces and the bottom surface of the container of plant cultivation of the present invention are composed of the biodegradable non-woven fabric and the paper, and thus the container is foldable. In addition, due to stiffness of the paper, it is possible to stack the containers while keeping respective three-dimensional shapes. Therefore, it is possible to pack and carry the containers efficiently.

In the case of stacking the containers while keeping the three-dimensional shapes, it is preferable to use a cylindrical hard polyethylene pot as an interliner. Such an interliner is used to maintain the three-dimensional shape.

When the container is folded, the folded portion, particularly, spun-bonded non-woven fabric composed of polylactic acid degrades easily. Therefore, it is preferable to store or carry the container while keeping the three-dimensional shape.

When the containers are stacked while keeping the three-dimensional shapes, it is possible to maintain the shapes, and also possible to save the effort of making each of the containers into the three-dimensional shape when the soil is to be poured therein. Accordingly, the soil can be poured in the container efficiently.

In the following examples, the present invention will be described further in detail. It is noted that the present invention is not limited to the following examples.

FIG. 1 is a perspective view of an inverted square pyramidal frustum according to the present invention, and other inverted pyramidal frustums and inverted conical frustums also have a similar shape.

### Examples

### (Example 1)

Non-woven fabric (having a weight of 20g/m².) composed of polylactic acid is cut into a shape as shown in FIG. 2 (such that one edge composing its bottomsurface is 5cm, one edge composing its upper opening portion is 7.5cm, its height is 10cm, and no slit is included). Coarse paper (having a weight of 50g/m²) is also cut into a similar shape. The biodegradable non-woven fabric is placed so as to form an inner side and overlapped on the coarse paper. Respective adjoining edges (15, 15', and the like) of the side surfaces are overlapped and sewn. Fourfold seam portions are sewn with a sewing thread made of polylactic acid, and the container for plant cultivation having an approximately inverted square pyramidal frustum shape according to the present invention, as shown in FIG. 1, is obtained.

The container does not have a through portion in the bottom surface.

### (Example 2)

The non-woven fabric (having a weight of 20g/m²) composed of polylactic acid is cut into a shape as shown in FIG. 3 (such that one edge composing its bottom surface is 6cm, one edge composing its upper opening portion is 9cm, its height is 8cm, and no through portion is included). The coarse paper (having a weight of 50 g/m²) is also cut into a similar shape (as aforementioned, and dotted lines indicates the through portion).

In the bottom surface of the coarse paper, a round-shaped through portion having a diameter of 2cm is arranged. The cut biodegradable non-woven fabric is placed onto the cut coarse paper, and seam portions (22, 22', and the like), which compose the side surfaces of the container and which are to be joined to each other, are overlapped with each other such that the paper is placed at an outer side. Thereafter, fourfold seam portions undergo the high-frequency fusion so as to form a dotted houndstooth check pattern.

### (Comparative example 1)

A container without having the paper included is manufactured in the same manner as example 1.

### (Comparative example 2)

A container without having the paper included is manufactured in the same manner as example 2.

### (Comparative example 3)

A container is manufactured in the same manner as comparative example 1, however, the biodegradable non-woven fabric having a weight of 70g is used.

### (Comparative example 4)

A container is manufactured in the same manner as comparative example 2, however, the biodegradable non-woven fabric having a weight of 120g is used.

### (Soil pouring test)

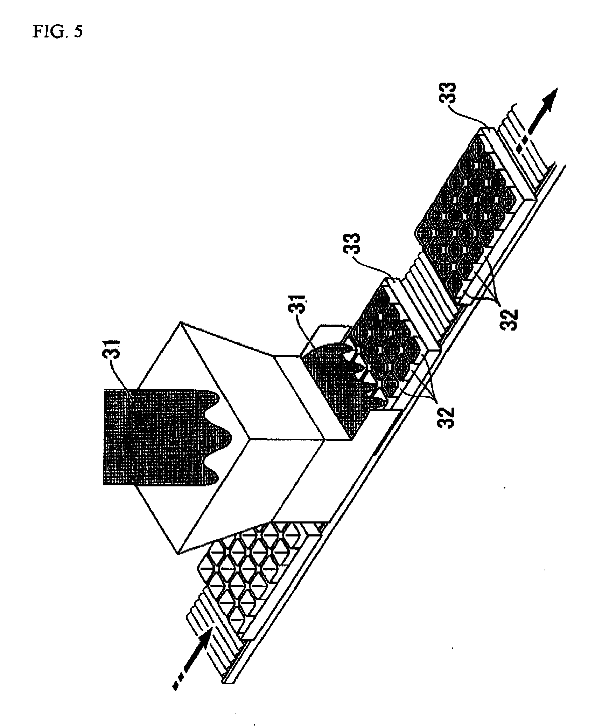

The containers for plant cultivation manufactured according to examples 1, 2, and comparative examples 1, 2, 3 and 4 are placed on a plate, and soil is poured therein by using a soil potting machine as shown in FIG. 5. Results of the test are shown in Table 1.

In Table 1, ○ indicates that equal to or less than 3 out of 100 containers result in a situation in which side surfaces of the containers are recognizably deformed, and the soil is spilled outside the container. Δ indicates that equal to or less than 10 out of 100 containers results in sucha situation, and × indicates that equal to or more than 50 out of 100 containers results in such a situation, respectively.

As is clear from Table 1, in each of the examples and comparative examples 3 and 4, that is, in the case where the paper is used for composing the container, and in the case where the weight of the biodegradable non-woven fabric is large, the side surfaces of the container is hardly deformed and the soil is not spilled outside the container. On the other hand, in each of comparative examples 1 and 2, the outer side surfaces of the container are deformed, and the soil is spilled. It is noted that a cost difference between comparative examples 1 and 2 and comparative examples 3 and 4 is as high as six times.

**[Table 1]**

| | Example 1 | Example 2 | Comparative example 1 | Comparative example 2 | Comparative example 3 | Comparative example 4 |
|---|---|---|---|---|---|---|
| Soil pouring test | ○ | ○ | × | × | ○ | ○ |

### (Container degradation test)

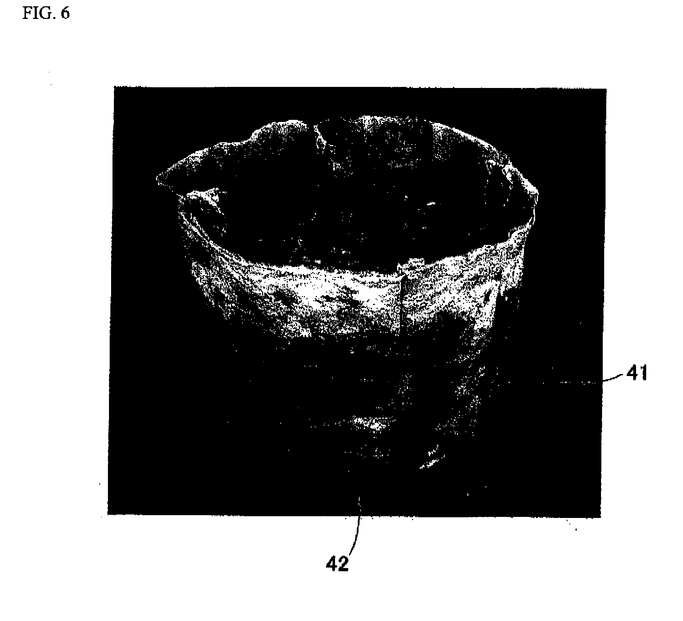

The container of example 1 is placed on the ground, and is watered on a sunny day. An outer appearance of the container after two months has elapsed is shown in FIG. 6. As is clear from FIG. 6, the paper composing the outer side of the container is dilapidated, whereas the biodegradable non-woven fabric is yet to be degraded, and thus the shape of the container is maintained.

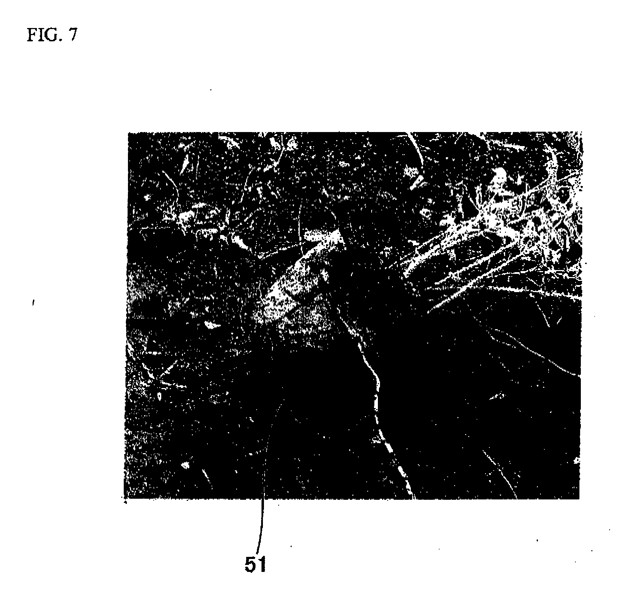

Seeds of rugosa rose are sowed in the container, and the container is buried in the ground after germination. After the buried container is left to stand for three month, the ground is dug up, and a rooting situation is examined. Results thereof are shown in FIG. 7. As is clear from FIG. 7, the container is not degraded, however, the roots develop favorably.

### INDUSTRIAL APPLICABILITY

A container for plant cultivation according to the present invention is applicable to plant cultivation such as cultivation in greenhouse.

## Claims

1. A container for plant cultivation, being of an approximately inverted frustum shape or an inclined frustum shape, having an upper opening portion, the container comprising
side surfaces and a bottom surface which are composed of paper and a non-woven fabric made of biodegradable fibers, wherein the biodegradable fibers are composed solely of polylactic acid, and
the non-woven fabric forms an inner side of the container for plant cultivation, and the paper forms an outer side thereof.

2. The container for plant cultivation according to claim 1, wherein the side surfaces of the container for plant cultivation are joined in dots by high-frequency fusion.

## Patentansprüche

1. Behälter zur Pflanzenzüchtung, der eine näherungsweise umgekehrte Kegelstumpfform oder eine geneigte Kegelstumpfform aufweist, der einen oberen Öffnungsabschnitt aufweist, wobei der Behälter umfasst:
Seitenflächen und eine Bodenfläche, die aus Papier und aus einem aus biologisch abbaubaren Fasern hergestellten Vlies bestehen, wobei die biologisch abbaubaren Fasern allein aus Polymilchsäure bestehen, und
wobei das Vlies eine Innenseite des Behälters zur Pflanzenzüchtung bildet und wobei das Papier eine Außenseite davon bildet.

2. Behälter zur Pflanzenzüchtung nach Anspruch 1, wobei die Seitenflächen des Behälters zur Pflanzenzüchtung durch Hochfrequenz-Schmelzschwei-ßen an Punkten verbunden sind.

## Revendications

1. Un conteneur pour la culture, ayant la forme d'un cône inversé ou d'un cône incliné ayant une partie supérieure ouverte, le conteneur comprend des surfaces latérales et une surface servant de base composées de papier et d'un tissu non tressé fait de fibres bio-dégradables composées seulement de 10 acides polylactiques, et le tissu non tressé constitue la partie intérieure du conteneur pour la culture, et le papier forme le côté extérieur de ce conteneur.

2. Le conteneur pour la culture visé dans la première revendication a les surfaces latérales jointes point par point par fusion à haute fréquence.
